# EUROPEAN PATENT APPLICATION

(11) **EP 1 683 563 A2**
(43) Date of publication of application: **26.07.2006**
(21) Application number: 06001290.3
(22) Date of filing: 23.01.2006
(51) Int. Cl.: B01D 53/06

(54) **Method and system for treating a gaseous stream containing organic and inorganic volatile compounds**

(30) Priority: 21.01.2005 IT MI20050075
(71) Applicant: POLARIS Srl, 20052 Monza (MI) (IT)
(72) Inventor: Masetto, Gian Claudio, 20052 Monza (MI) (IT); Masetto, Claudia, 20052 Monza (MI) (IT)
(74) Representative: Premru, Rok

(57) **Abstract**

Method for purifying a gaseous stream, containing volatile organic or inorganic compounds, by means of a rotor, containing adsorbent material, rotating around an axis, said adsorbent material contained in a rotor passing through an adsorption zone for the polluted compounds, a desorption zone for the polluted compounds and a cooling zone (24), said method comprising the steps of enabling the polluted gaseous stream to cross said adsorption zone to adsorb volatile compounds contained in the stream, generating a desorbing gaseous stream that crosses the desorption zone, whose flow-rate is independent from the one of the gaseous stream to be purified, said desorbing stream having a sufficient temperature for securing the desorbing process of the adsorbent material contained inside said rotor and generating a cooling stream that crosses the cooling zone, whose flow-rate is independent from the one of the gaseous stream to be purified, said cooling stream having a sufficient temperature for enabling the adsorbent material contained in the cited rotor to return in condition to adsorb. The desorbing stream crossing the desorbing zone being an inert gas or a low-oxygen content gas.

## Description

This invention relates to a method and an apparatus for removing pollutants from a gaseous stream containing organic and inorganic volatile compounds, based on the use of a rotating adsorbing bed.

Such method and apparatus can be used, in particular, in the removal and recovery of volatile compounds present in gaseous emissions from industrial processes.

Many treatment plants are known for the treatment of gaseous emissions where the volatile compounds are temporarily retained, and subsequently released, by means of rotating apparatuses performing the concentration of such compounds.

Briefly, the rotating concentrators of the known technique consist of a rotor, equipped with cavities containing adsorbent materials - fixed on the cavities and thus in minor quantities if compared with the fixed bed plants - which cyclically pass through at least two functionally different sectors:
- one adsorption sector, passed through by the gaseous primary stream to be purified;
- one regeneration sector, passed through by a gaseous secondary stream for regenerating, usually made of hot air - taken from a fraction of the polluted stream itself or directly from the atmosphere - which recovers the pollutants released during the desorption.

Therefore, during the rotation, the adsorbent material eontained into the rotor is subjected to adsorption phases alternated with desorption phases, typically from 5 to 20 times per hour.

The real performance of a rotating adsorption bed therefore depends also on the rotating speed of the bed and not only on the quantity of material contained in the adsorption bed.

Preferably, a third cooling sector is provided, to reduce the temperature of the adsorbing material immediately after the regeneration process.

The secondary stream has a flow-rate largely lower than the one of the primary stream (typically ranging between 10 to 20 times) and hence carries a much higher pollutants concentration (typically ranging between 10 to 20 times).

The volatile compounds present in the secondary stream can be sent to a condensation plant to be recovered in liquid form (and possibly separated by distillation, in the case of a mixture) in particular if the compounds are interesting from the commercial point of view.

Alternatively, said secondary stream can be thermally destroyed in a suitable plant.

The latter solution can be preferred in case of complex mixtures of volatile organic compounds that are difficult to separate, having high combustion heats.

Indeed, the combustion of the recovered pollutants can represent a final solution for their disposal, and the combustion heat can be recovered, thus minimising the thermal energy consumption needed for performing the desorption process.

For a better understanding of methods and treatment plants based on the use of a rotating concentrator, reference can be made, for example, to the patents US-A-6, 165, 254 and US-A-6, 328, 787 in the name of SEIBU GIKEN Co. Ltd.

However, the known methods and plants for the treatment of gaseous emissions based on the use of a rotary concentrator have some disadvantages.

If the concentrations of the pollutants in the stream to be treated are low (for example in the order of 2000 mg/m³), the removal yield of the same can reach an acceptable value, in the range of 90% to 95%.

Further, this efficiency can be often insufficient to comply with more restrictive limits, in particular if the inlet concentration of pollutants is higher (for example 5000 mg/m³).

Another disadvantage of the known technique is due to the high thermal levels to be reached for the desorption of the adsorbent material, performed with hot air reaching temperatures up to 300°C, thus due to difficulties carrying it out in a safe and efficient way and with low running costs.

The rotating concentrators must refer to safety criteria and rules, which impose not to exceed, in the secondary desorption stream, a concentration of the desorbed compounds of 25% of the lower explosion limit (LEL).

In presence of such a low concentration level of the desorbed compounds in the secondary stream, both their recovery (through condensation and distillation) and their destruction (through combustion) involve high investment and running costs.

Alternatively, to further concentrate said secondary stream, it is required to adopt an adsorption stage onto fixed beds downstream the rotating concentrator.

Moreover, this further adsorption stage possibly turns out to be large due to the high dilution of the secondary stream required by the LEL - limitation.

Since, in addition to said concentrators, the overall investment includes also the downstream plants for the recovery or the combustion of pollutants - of big dimensions because of the high dilution - the use of the adsorption plants of the known technique involves high investment and running costs.

Particularly, the choice of a recovery approach downstream the concentrators turns out to be disadvantageous - with the exception of the case where there is a product of great value to be recovered ― and this is out of line with the most recent ecology directives, supportive towards the recovery options.

Aim of the present invention is to solve part of the problems of the known technique and, in particular, the above mentioned problems.

Especially, it is intended to propose a method and a plant conceived to favour as much as possible the recovery of the pollutant compounds, or the reduction of the harmful combustion products, and to reduce the investment and running costs.

This target can be attained through a method in compliance with claim 1 and through an apparatus in compliance with claim 14.

Further advantages can be obtained through the features of the dependent claims.

Some possible embodiments of the methods and plants implementing such processes will be hereinafter described with reference to the attached drawings, where:
- Fig.1 shows a schematic view of an adsorption and desorption rotary bed unit according to a first embodiment;
- Fig.2 shows a schematic view of an adsorption and desorption rotary bed unit according to a second embodiment;
- Fig.3 shows a schematic view of an adsorption and desorption rotary bed unit according to a third embodiment;
- Fig.4 shows a schematic view of a portion of an adsorption and desorption plant where the structural features of a preferred execution form of the rotor, containing the adsorbent material, are better highlighted;
- Fig. 5a and 5b show two rotor views, topside and bottom side respectively.

With reference to the attached drawings, the reference number 1 indicates a rotor, rotating around an axis X, containing adsorbent material.

In the preferred embodiment the adsorbent material is allocated in a plurality of cavities 3, with an axis substantially and/or generically parallel to the rotation axis X, whose opposite extremities are open for enabling the gaseous streams to pass through.

The cavities 3, containing the adsorbent material, cyclically cross an adsorption zone 21, a desorption zone 22 and a cooling zone 24, physically distinct and separated.

Each one of said adsorption zone 21, desorption zone 22 and cooling zone 24 is delimited by a couple of opposite openings, having a shape generically and/or substantially corresponding to a circular sector, facing the extremities of the cavities 3 of the rotor.

According to a possible embodiment said zones 21, 22, 24 are defined by separation means 400 inclusive of sliding seals, for example seals in an auto lubricating material such as graphite or polytetrafluoroethylene, driven by an adjustable spring or by weight system for keeping the pressure on the opposite surfaces of rotor 1 constantly calibrated and homogeneous.

The adsorption zone 21 has a width preferably ranging between 230° and 270°, and is crossed by a gaseous stream 31 (primary stream) to be cleaned.

Preferably said stream 31 is pre-filtered to remove solid particles possibly present.

The gaseous stream 31 can be carried and controlled by means 130 and 131.

The desorption zone 22 has a width preferably ranging from 40° and 60°, and is crossed by a gaseous desorption stream 32 at a sufficient temperature for inducing the desorption process of the volatile compounds from the adsorbent material, contained inside the cavities 3, that are passed through by the regeneration stream 32,

In fact, such temperature depends first of all on the nature of the volatile compounds to be adsorbed and on the nature of the adsorbent material inside the rotor, and is defined thanks to the specific adsorption/desorption isotherms at different temperatures.

The cooling zone 24, having a width preferably between 40° to 60°, is crossed by a cooling stream 34 having a sufficiently low temperature for restoring the adsorbent material according to the needs, this conditions determined through the above mentioned isotherms.

The desorption stream 32 and the cooling stream 34 are respectively generated by means 130 and 131.

The desorption gaseous stream 32 is formed by an inert gas, preferably nitrogen, or low-oxygen content, i.e. added with an inert gas so that the oxygen volume content (if present) stays permanently below 5 % of the overall volume of the desorption gas.

Such feature advantageously allows to possibly increase the concentration of the desorbed compounds - up to the saturation levels at the desorption temperature - present in the desorption stream 32, preventing any explosion risk.

The criteria and the safety rules, that impose a maximum concentration threshold lower than 25% of LEL, are solely referred to an atmosphere having a volume of oxygen of at least 19.5%.

Applying the Limiting Concentration of Oxygen (LOC) criterion, the highest concentration of the desorbed compounds, sustainable without any risk, makes their recovery and thermal destruction more easy as well as cheap.

In particular it is possible to use smaller heaters and, this way, to obtain a more efficient combustion of the desorbed gaseous mixture.

Opportunely the plant may include means 110 for monitoring and controlling the oxygen content in the desorption stream 32.

In the described embodiments the means adopted for generating the desorption stream 32 are independent from the ones for the stream to be submitted to the desorption process.

Similarly also the means used for generating the cooling stream 34 are independent from the ones for the stream 31 to be purified.

This way it is possible to obtain a flow-rate of the desorption stream 32 and of the cooling stream 34 independent from the flow-rate of stream 31 to be purified.

Furthermore, the temperatures of the desorption stream 32 and of the cooling stream 34 are adjustable independently.

These features enable to provide gaseous streams having energies and thermal levels in line with all the possible needs of an industrial application.

Thanks to these features it is possible to reduce the times needed to carry out the desorption and the cooling of the rotor.

Therefore, it is possible to increase the rotation speed of rotor 1 and the performances of the same.

The means used to generate the desorption stream 32 include pneumofore means 231 and heating means 232 - for example an heat exchanger - to supply heat to the desorption stream 32 and maintain the temperature of the inlet stream to the desorption zone 22 inside a first temperature range.

In a preferred embodiment the means for generating the desorption stream 32 include a loop 102, suitable for generating a circulating stream in the desorption zone 22, provided with the pneumofore means 231 and the heating means 232.

Preferably the pneumofore means 231 consist in a variable speed blower, suitable for controlling the flow-rate of the desorption stream 32.

The loop 102 is fed with an inert or low-oxygen content gas entering by means of a feeding duct 103.

Also a duct 242 is available for downflowing the desorption stream 32 from loop 102.

Providing the closed loop 102 with a variable speed blower 231, it is possible to obtain a high flow-rate in the desorption zone 22 even though the flow-rate of the downflow 242 is kept low.

Adjusting the blower 231 and/or the heating means 232 it is possible to control the thermal power transferred to the heating zone 32 independently from the flow-rate of the primary flow 31 minimizing, at the same time, the consumption of the inert or low-oxygen content gas needed for feeding the desorption circuit.

Preferably, between the desorption zone 22 and the cooling zone 24 a further washing zone 23 is provided, with a width in the range from 5° to 10°.

The washing zone 23 is crossed by a gaseous cleaning stream 33, formed by an inert or low-oxygen content gas at a temperature higher than the gaseous desorbing stream 32, sufficient for securing that the residual compounds in the cavities 3 after the desorption, downstream the desorption zone 22, enter in gaseous phase and/or are removed by the stream 33.

The function of the cleaning stream 33 is to eliminate the residual quantities of still removable compounds present on the cavities 3, which the regeneration stream 32 cannot remove because this desorbing stream contains, at equilibrium, a high concentration of desorbed compounds.

For this reason the cleaning gas 33 must be substantially clean, i.e. free of the organic or inorganic compounds to he desorbed.

The stream 33, that performs the cleaning in the washing zone 23, can be subsequently used for feeding the desorption stream 32.

The means used for generating the washing stream 33 consist in heating means 332 - for example a heat exchanger ― to provide heat to the washing stream 33 and maintain the temperature of the stream entering the washing zone 23 inside a second temperature range.

Also the cleaning stream 33 is adjustable independently from the flow-rate of the primary stream 31.

The means for generating the cooling stream 34 consist in pneumoforc means 341.

In addition, cooling means 342 must be provided - for example a heat exchanger - to absorb heat from the cooling stream 34 and to keep the temperature of the stream 34 entering the cooling zone 24 into a third temperature range.

In a possible embodiment the cooling loop 34 includes a closed loop 104 suitable for providing a circulating stream in the cooling zone 24.

Pneumofore 341 and cooling 342 means are provided on the closed loop ring 104.

Preferably, the pneumofore means 341 consist in a variable speed blower, suitable for controlling the flow-rate of the cooling stream 34.

In the described embodiment the closed loop 104 is fed with inert or low-oxygen content gas by means of an inlet duct 114.

From the closed loop ring 104 an downflowing duct 330 is provided to feed the washing circuit 103.

The downflow 330 balances the inert or low-oxygen content gas entering the closed loop ring 104, therefore the flow-rate of the stream 34 is kept substantially constant in time.

Preferably, also the cooling stream 34 is an inert or low-oxygen content gas.

Adjusting the blower 341 and/or the cooling means 342 it is possible to control the thermal and energy level of the adsorbent material crossing the cooling zone 24, minimizing, at the same time, the consumption of inert or low-oxygen content gas needed for feeding the cooling circuit 34.

In the preferred embodiment of construction, the cooling stream 34 is used to feed the cleaning stream 33 and the latter, in turn, is used to feed the desorption stream 32.

It is possible to reduce the operating costs by connecting in series the means used for generating the desorption stream 32, the cleaning stream 33 and the cooling stream 34.

In the preferred embodiment of construction the means for generating the cleaning stream 33 don't need pneumofore means, because the cleaning stream is generated thanks to the difference of pressure between one point chosen on the loop 102 of the desorption circuit 32 and one point of the loop 104 of the cooling circuit 34.

The cooling loop 104 is fed with inert or low-oxygen content gas coming from the cleaning circuit.

The downflow stream 33, coming from duct 330, is heated by heating means 332, for example a heat exchanger, before reaching the washing zone 23.

The inert or low-oxygen content stream 32 of the desorption circuit can contain the desorbed compounds up to the saturation levels at high temperature.

A downflow 242 of inert or low-oxygen content gas containing the desorbed compounds leaves the loop 102, from the desorption zone 22, thus keeping substantially constant the flow-rate of the circulating stream 32 inside the desorption zone 22.

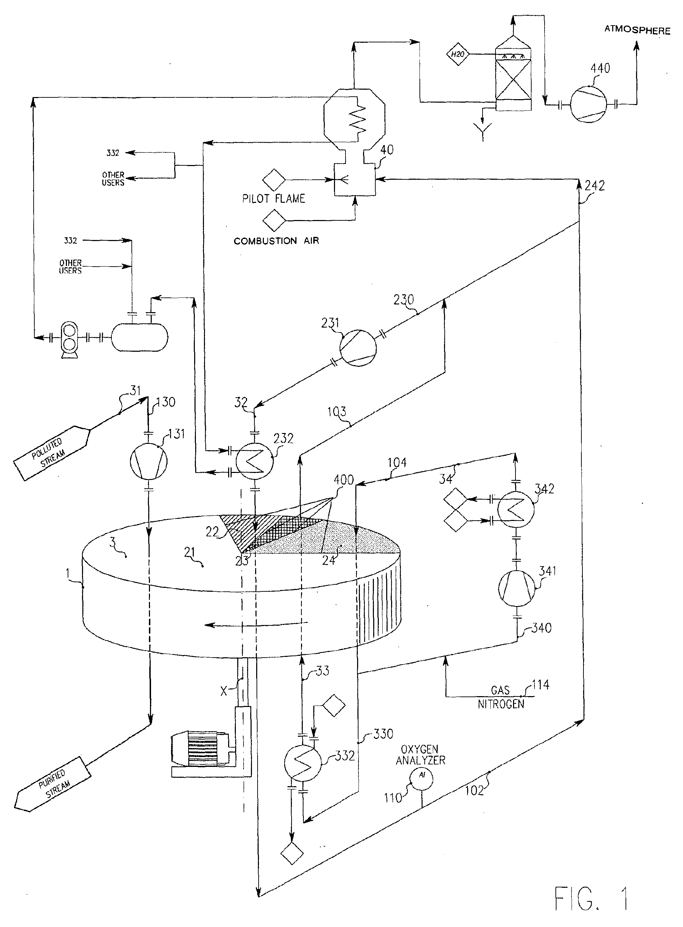

The downflow 242, whose flow-rate is relatively small, can be sent to a thermal heater 40 to thermally destroy the desorbed compounds (Fig.1).

In this case at least a portion of the thermal energy released during the combustion of the stream 242 can be favourably used to heat the desorption and cleaning streams 32 and 33, by means of the heat exchangers 232 and 332, and the possibly residual energy can be exploited by other users of the company.

Due to the high concentration of the desorbed compounds, the combustion doesn't require a support fuel for the flame, so that the combustion plants result to be of small dimensions.

The plant implementing the method described above is shown in Fig.1.

Alternatively, the downflow 242 coming from the desorption circuit can be sent to a condenser 41, where the desorbed compounds reach their dew point and can be separated.

Preferably, the condenser 41 is a cryogenic condenser and the cryogenic energy is obtained by evaporating liquid nitrogen.

The condensed compounds are then collected in a dedicated tank 12.

For reducing the running costs of the plant the overflow 242, coming from the regeneration circuit, before reaching the cryogenic condenser 41, is cooled by means of a heat exchanger 42 fed with water or another chilled fluid.

At least a part of the gaseous nitrogen coming from the cryogenic condenser 41 can be advantageously used to directly feed the cleaning circuit 32 or the cooling circuit 34.

In this way the nitrogen consumption of the plant is strongly reduced and, consequently, the running costs, and the efficiency of the whole regeneration process of the adsorption bed is improved.

A suitable distillation device (not shown) linked in series with the cryogenic condenser 41 can be provided, if the desorbed compounds are a mixture.

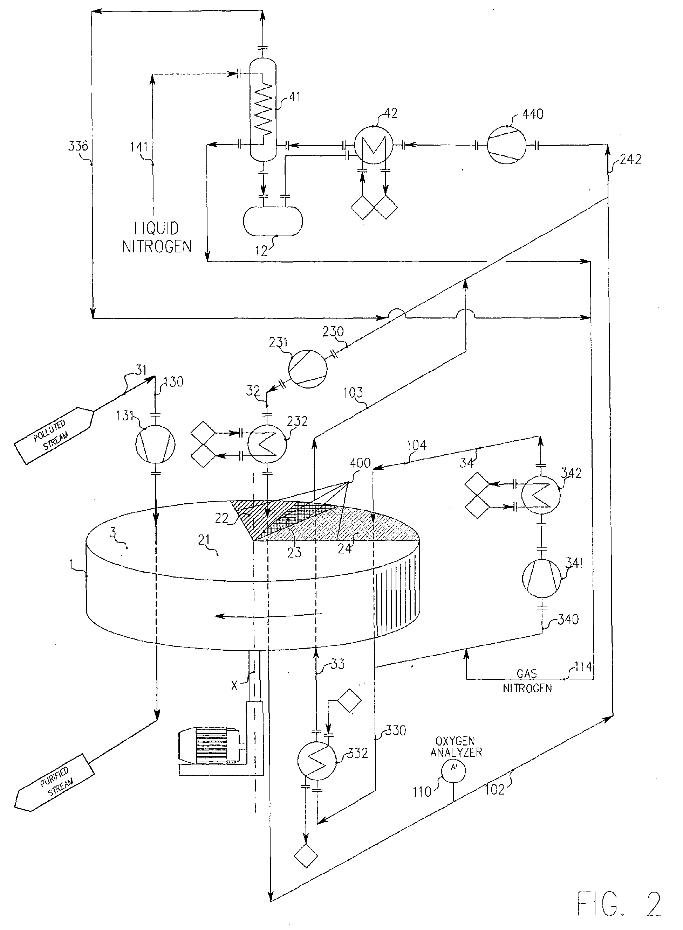

The plant implementing the method described above is shown in Fig.2.

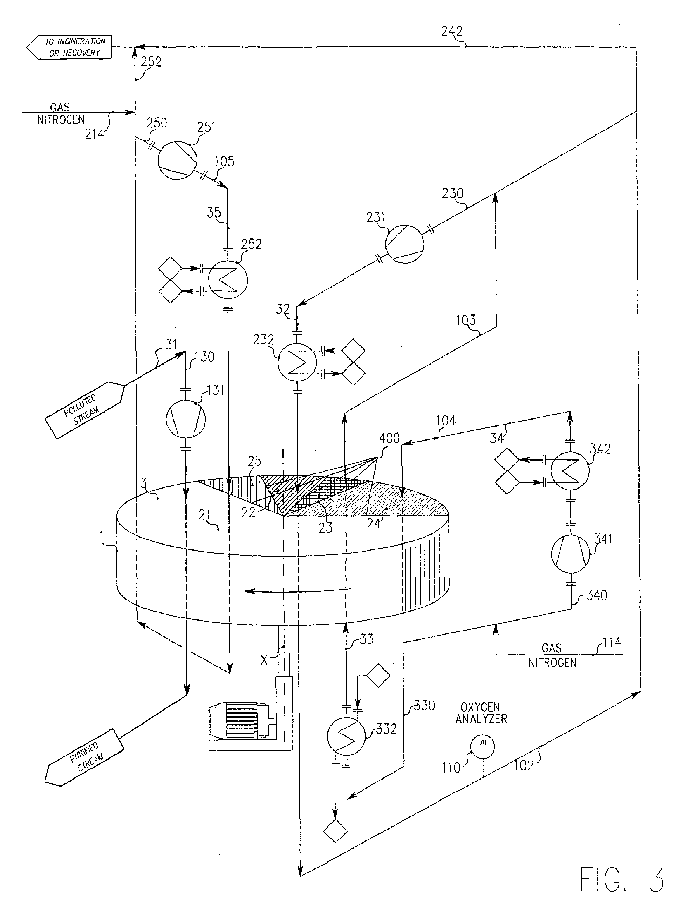

A further embodiment (Fig.3) includes a second desorption zone 25, crossed by a second desorption stream 35 formed by an inert or low-oxygen content gas, too.

The second adsorption stream 35 is generated by means consisting in heating means 252 and pneumofore means 251.

The means generating the second desorption stream 35 are independent from the ones generating the stream 31 to be purified.

For this reason the flow-rate of the second desorption stream 35 can be controlled according to the need.

Preferably, the means generating the second desorption stream 35 consist in a closed loop 105 on which the pneumofore means 251 and the heating means 252 are provided.

The closed loop 105 is fed with inert or low-oxygen content recovery gas 214 and is equipped with a downflow duct 253 of the second desorption stream 35, which is connected to the downflow duct 242 of the desorption stream 32.

The circuits generating the first and the second desorption streams 32 and 35 are fed separately.

This way the whole desorption and regeneration process applied to the rotary adsorption bed is more effective and enables to reach, in the adsorption zone, such a high separation level of the polluting compounds that the most restrictive limits can be easily respected in the matter of their final concentration on the treated primary stream.

If the desorbed compounds are to be recovered the second circuit 35 can be fed with the stream of inert or low-oxygen content gas 336 coming from the condenser 41.

Preferably, the first and the second desorption zone work at increasing temperature levels.

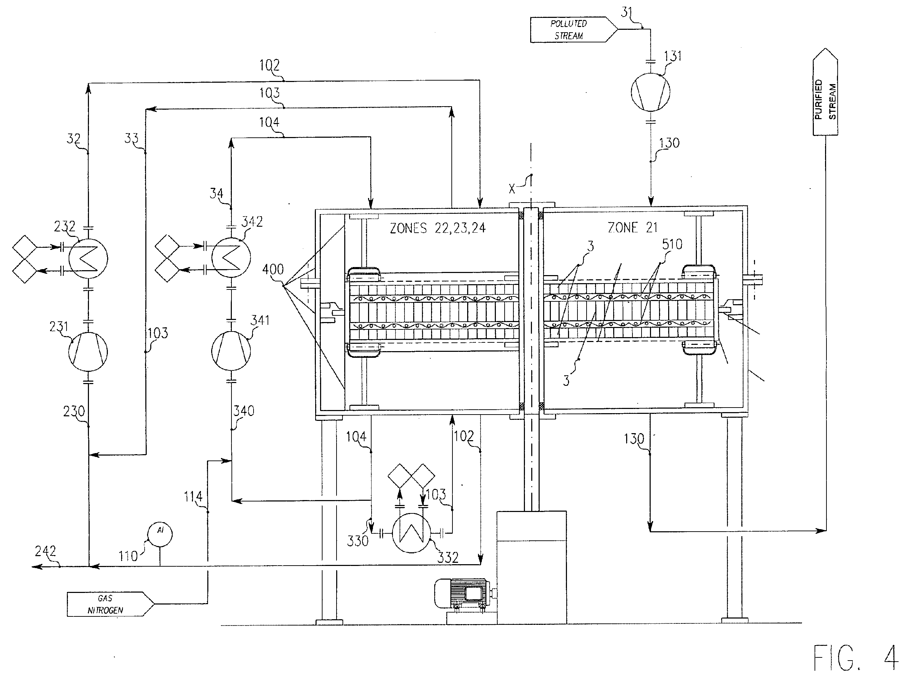

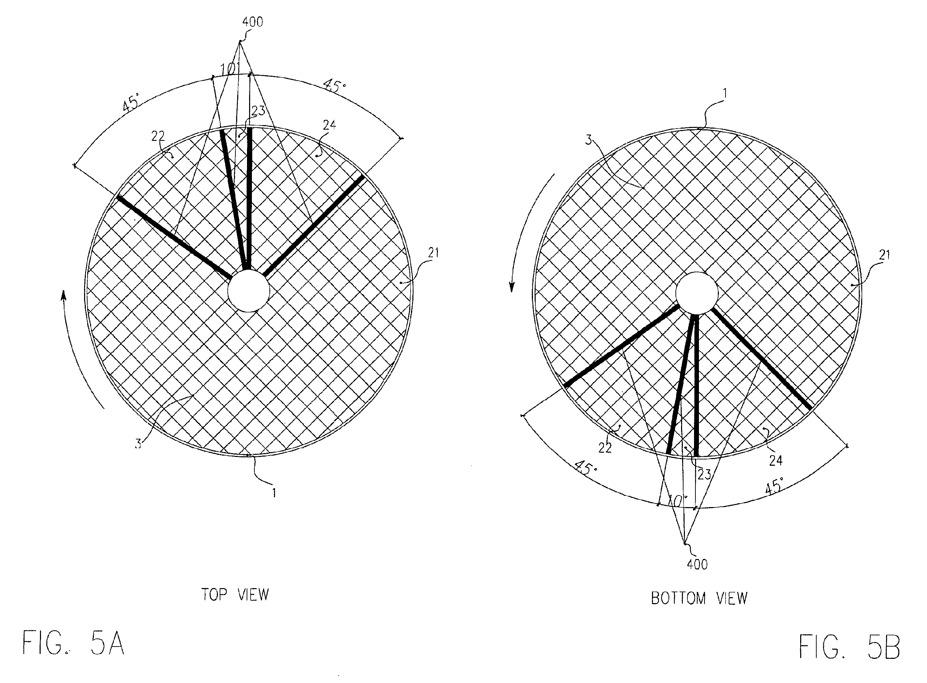

The construction details of the plant are shown in Fig. 4, 5a and 5b.

Preferably, the cavities 3 of rotor 1 are filled with adsorbent material in incoherent form and little granulometry, typically in the range 200 µm to 1200 µm.

The filling of said cavities 3 must keep them permeable to gases.

This solution is aimed to get a homogeneous distribution of the gaseous streams through the adsorbent material, avoiding preferential pathways and sharing the pressure losses.

The ends of the cavities 3 are closed by metal, single or double, nets with very fine mesh which allow the passage of gaseous streams but retain the adsorbent material in incoherent form.

Since the cavities 3 are filled with higher quantities of adsorbent material than in the conventional rotors, where the adsorbent material is only fixed on the walls of the cavity, it is possible to obtain in proportion a higher adsorption per surface unit crossed by the stream to be purified.

It is worth to clarify the structural simplicity and the low costs for the realisation of this solution in comparison to traditional solutions, where the adsorbent material has to be fixed to the walls of the cavity, instead of being simply held into se same.

Preferably, the nets have a free passage ports much lower than the granulometry of the adsorbent material, to avoid the granules of the adsorbent material occluding the nets.

Preferably, the adsorbent material contained in the cavities 3 of rotor 1 is chosen on the basis of the features of high porosity, low adsorption and desorption energy, and low desorption temperature.

The adsorbent material contained in the cavities 3 of the rotor 1 can be made of chemically stable, high porosity resins, preferably hydrophobic, having average dimensions ranging between 0.25 mm and 0.8 mm, and specific area in the range 400 m²/g to 1.200 m²/g, suitable to tolerate heating temperatures, in inert atmosphere, higher than the ones needed for the desorption process.

Such resins are available on the market, for example by Mitsubishi (Japan) with the trademark Sepabeads SP850.

These adsorbent resins require contact times in the order of fractions of a second, and temperatures and energies for their regeneration relatively low in comparison with other adsorbent materials used in the conventional rotors (zeolites, activated carbons), hence it is possible to reduce the thermal energy consumption for the desorption process.

Approximately adsorption energies are about 40% - 50% in comparison to the ones usually requested by the adsorbent materials used in the rotary concentrators of the known technique, and the desorption temperatures are in the range 100°C to 120°C.

Other suitable adsorbent materials, that can be used in the rotor 1, are some special active carbons, chemically or thermally activated, having features and behaviours similar to the high-porosity resins, for example supplied by Norit (Holland).

The choice of the adsorbent materials will be made, case by case, on the basis of the different needs of the adsorption process.

The resins will be preferred when the absence of active sites for the catalysis is important, or a possible hydrolysis of the adsorbed compounds must be avoided, thanks to their hydrophobic behaviour.

For a question of costs and of mechanical strength, rotor (1) is preferably made of metal.

In this case the internal walls of cavity 3 can be lagged with thermal insulating material, for instance epoxy resins or other resins resulting compatible with the adsorbed compound, for reducing the heat transfer coefficient and therefore the amount of heat transmitted to the metallic structure of the rotor during the desorbing and washing phases and transmitted by the metallic structure of the rotor during the cooling phase.

Preferably each cavity 3 of the rotor shows a cross section between 900 mm² and 2.500 mm² and a length between 30 mm and 150 mm, according to the nature of pollutants to be adsorbed (in terms of quantity and quality), to the requested removal threshold and to the performance capacity of the adsorbent material adopted.

Using an adequately deep cavity 3, it is possible to use high amounts of adsorbent material and, therefore, to obtain higher adsorption degrees also when the stream to be purified. contains a high concentration of pollutants.

For attaining an efficient desorption effect, the stream flow-rate per unit of surface inside the desorption zone 22 can result higher in respect of the stream flow-rate per unit of surface inside the adsorption zone 21 and, consequently, the internal pressure inside the desorption zone 22 will be higher than inside the adsorption zone 21.

This way, during the transition from the adsorption zone 21 to the desorption zone 22, it can be avoided those cavities 3 to be simultaneously crossed by both gaseous streams, reducing the efficiency of the separating means 400.

Moreover, it is preferable the internal pressure in the cooling zone 24 to be higher than in the adsorption zone 21.

This way, during the transition from the cooling zone 21 to the desorption zone 22, it can be avoided the cavities 3 to be simultaneously crossed by both gaseous streams.

Preferably the washing stream 33, that crosses said washing zone 23, is in countercurrent to said desorption stream 22, cooling stream 24 and gaseous stream 31 to be purified.

This way eventual residues of the desorbed compounds are accumulated at the opposed extremity of the inlet port of the gaseous stream to be purified, attaining therefore the optimal adsorption capacity of the material contained inside cavities 3.

Adopting the recommendations described above, the flow-rate of the stream coming from the regeneration circuit is around the magnitude of 0.1 to 0.6 % of the flow-rate of the primary stream to be purified.

In other words, the plant and the described method enable to arrange, for the final treatment of the secondary stream, condensing or incineration devices sized for flow-rates of the pollutants several times lower than those currently requested by the known technique.

As indicative example, the following description summarises some running parameters attainable by a plant corresponding to the drawings enclosed.

### EXAMPLE 1

Treatment of a gaseous stream formed by air containing ethyl acetate (2.500 mg/Nm³) performed by a rotor having a revolution speed of 10 RPM, containing resins Sepabeads SP850 in an 80 mm deep bed.

### ADSORPTION (sector width 260°)

Initial ethyl acetate concentration in the primary stream: 2.500 mg/Nm³.

Final ethyl acetate concentration in the primary purified stream: 75 mg/Nm³.
Purification yield: 97 %.
Primary stream temperature: 25°C.
Average temperature in the bed (adsorption zone): 26°C.
Primary stream speed: 1,25 m/s.
Inlct gas pressure in the adsorption zone: 800 mm H₂O.
Solvent adsorption coefficient: 77,6 g/kg resin.

### DESORPTION (sector width 50°)

Heating temperature of desorption stream: 150°C.
Average bed temperature (desorption zone): 110°C.
Desorption stream speed: 1,4 m/s.
Desorption stream pressure: 900 mm H₂O.
Percentage of the downflow stream (to be incinerated or recovered) in comparison to the desorption stream flow-rate (in closed loop): 1,3 %.

### WASHING

Nitrogen stream temperature: 150°C.
Average bed temperature (washing zone): 125°C.
Cleaning stream speed: 0,08 m/s.
Percentage of the downflow stream (in the washing zone) in comparison to the cooling stream flow-rate (in closed loop): 1,4 %.

### COOLING

Cooling nitrogen stream temperature: 20°C.
Average bed temperature (cooling zone): 35°C.
Cooling stream speed: 1,5 m/s.
Cooling stream pressure: 980 mm H₂O.
Percentage of the purging nitrogen stream (in the cooling zone) in comparison to the cooling stream flow-rate (in closed loop): 1,4 %.

### COMPARISON BETWEEN THE PRIMARY STREAM TO BE PURIFIED AND THE SECONDARY STREAM (TO BE INCINERATED OR RECOVERED)

Volume flow-rates ratio: 400 to 1.
Solvent concentration ratio: 1 to 388.

### DIMENSIONAL COMPARISON BETWEEN THE PLANTS DOWNSTREAM FOR INCINERATING OR RECOVERING THE SOLVENT

Whatever approach, recovery or destruction, is used a concentration lower than 0.25 x LEL has to be kept (the ethyl acetate LEL is 2 %) if the stream has not a low oxygen content, hence the highest concentration allowed in the secondary stream equals 5000 ppm. This criterion can't be applied using the plant and the method described, so the flow-rate and, as a consequence, the dimensions of the plants downstream are reduced of 180 times.

## Claims

1. Method for purifying a gaseous stream (31), containing volatile organic or inorganic compounds, by means of a rotor (1), containing adsorbent material, rotating around an axis (X), said adsorbent material contained in said rotor (1) passing through a:
- adsorption zone (21) for the polluted compounds;
- desorption zone (22) for the polluted compounds;
- cooling zone (24);
said method comprising the steps of:
- enabling said polluted gaseous stream (31) to cross said adsorption zone (21) to adsorb volatile compounds contained in said stream (31);
- generating a desorbing gaseous stream (32) that crosses the desorption zone (22), whose flow-rate is independent from the one of said gaseous stream (31) to be purified, said desorbing stream (32) having a sufficient temperature for securing the desorbing process of the adsorbent material contained inside said rotor (1); and
- generating a cooling stream (34) that crosses the cooling zone (24), whose flow-rate is independent from the one of the gaseous stream (31) to be purified, said cooling stream (34) having a sufficient temperature for enabling the adsorbent material contained in the above cited rotor (1) to return in condition to adsorb,
said desorbing stream (32) crossing the desorbing zone (22) being an inert gas or a low-oxygen content gas.

2. Method, according to claim 1, where said desorbing gaseous stream (32) crossing said desorption zone (22) is a recycling desorbing stream, and where the following steps are foreseen:
- feeding said recycle stream (32) into the desorption zone (22) by means of an inert or low - oxygen content gas;
- transferring heat to said recycle stream (32) that crosses said desorption zone (22), maintaining said recycling stream (32) at a sufficient temperature to induce the desorption process;
- generating a downflow of inert or low-oxygen content gas (242) from said recycle stream (32), in a way to substantially maintain stable the flow-rate of said recycle stream (32) in said desorption zone (22).

3. Method, according to claim 2, where said adsorbing material contained in rotor (1) passes through a washing zone (23), said washing zone being in between the adsorption zone (22) and the cooling zone (24), and where the next steps have been foreseen:
- generating a cleaning stream (33), which crosses the washing zone (23), whose flow-rate is independent from the flow-rate of stream (31) to be purified, said washing stream (33) being an inert or low-oxygen content gas having a sufficient temperature for enabling the desorbed compounds coming from the desorption zone (22) to stay in gaseous phase and to be carried out by the washing gaseous stream (33);
- using almost a portion of said washing stream (33) for feeding said recycle stream (32) in the desorption zone (22).

4. Method, according to claim 3, where said cleaning stream (33) crossing said washing zone (23) is in counter current to said desorption stream (32).

5. Method, according to claim 3 or 4, where said cooling gas stream (34) crossing said cooling zone (24) is a recycling stream (34) and where the following steps are foreseen:
- feeding said recycle stream (34) by means of an inert or low-oxygen content gas;
- absorbing heat from said recycle stream (34), to maintain said recycle stream (34) at a sufficient temperature to restore conditions for the adsorbent material to adsorb;
- generating a downflow (330) of said recycle gas (34) for substantially maintaining constant the flow-rate of said recycle stream (34); and
- using said downflow (330) from said recycle gas (34) in said cooling zone (24) to feed said cleaning stream (33).

6. Method, according to one of the claims from 2 to 5, where said gas downflow (242) coming from said desorption recycle stream (32) is fed to a combustion device (40) for thermally destroying the desorbed compounds and where the heat produced by said combustion device (40) is used for warming up said cleaning stream (33) and/or said desorption stream (32).

7. Method, according to one of the claims from 2 to 5, where said gas downflow (242) coming from said desorption recycle stream (32) is sent to a cryogenic condenser (41) fed by liquid nitrogen (141), to separate the desorbed compounds present in said stream (242), attaining a clean gaseous inert or low-oxygen content stream (336).

8. Method, according to claim 7, where the gaseous nitrogen deriving from the evaporation of said liquid nitrogen is used to feed directly said cooling stream (34) or said washing stream (33).

9. Method, according to claim 7, where said downflow of clean gas (336) is used to directly feed said cooling stream (34) or said cleaning stream (33).

10. Method, according to one of the claims from 3 to 9, where said adsorbent material contained in said rotor (1) crosses a second adsorption zone (25) adjacent to said desorption zone (22), and where the further step to generate a second desorption gaseous stream (35) that crosses said desorption zone (25) has been foreseen, whose flow-rate is independent from the flow-rate of stream (31) to be purified, said second desorption stream (35) having a sufficient temperature to secure the desorption process of the adsorbed material contained in said rotor (1), said second desorption gas stream (35) that crosses said second desorption zone (25) being an inert or a low-oxygen content gas.

11. Method, according to claim 10, where said second desorbing gaseous stream (35) crossing said desorption zone (25) is a second recycle stream of desorption and where the further steps have been foreseen:
- feeding said recycle stream (35) in said second adsorption zone (25) by means of an inert or low-oxygen content gas (214);
- transferring heat to said second recycling stream (35) crossing said second desorption zone (25), to maintain said second recycling stream (35) to a sufficient temperature to secure the desorption process of the adsorbent material contained in said rotor (1);
- generating a second inert or low-oxygen content downflow (253) containing desorbed compounds from said recycling stream (35), in a way to substantially maintain constant the flow-rate of said recycling stream (35) in said desorption zone (25);
- joining said second gas downflow (253) to said downflow gas (242).

12. Method, according to anyone of previous claims, where said gaseous stream to be purified (31), said desorbing stream (32) or said desorbing streams (32) and (35), said cleaning stream (33) and said cooling stream (34) cross layers of adsorbing materials of incoherent form.

13. Method, according to anyone of the previous claims, where the pressure of said desorption stream (32) is higher than the pressure of said stream to be purified (31), or the pressures of said desorption streams (35) and (32) are greater than the pressure of said stream to be purified (31).

14. Method, according to anyone of previous claims, where the pressure of said gaseous cooling stream (34) is higher than the pressure of said stream to be purified (31).

15. Method, according to anyone of claims from 2 to 11, where said adsorption zone (21) have a magnitude between 210° and 270°, where said desorption zone (22) or said desorption zones (22, 25) have a magnitude between 40° and 70°, where said washing zone (23) has a magnitude between 5° and 10° and where said cooling zone (24) has a magnitude between 40° and 70°.

16. Plant aimed to purify a gaseous stream (31) containing organic volatile or inorganic compounds, comprising:
- a rotor (1), containing an adsorbent material, able to rotate around an axis (X),
- means (400) for delimiting the inside spaces of said rotor (1) occupied by:
- an adsorption zone (21) finalised to be crossed by a gas to be purified (31);
- a desorption zone (22) finalised to be crossed by a desorbing gaseous stream (32);
- a cooling zone (24) finalised to be crossed by a cooling gaseous stream (34);
said zones (21, 22, 24) being crossed by said adsorbent material present in said rotor (1):
- means for creating a gaseous stream (31) to be purified which flows through the adsorption zone (21);
- means for generating an inert or low-oxygen content gas stream (32), crossing said desorption zone (22), whose flow-rate is independent from the flow-rate of the stream to be purified (31), having an adequate temperature for activating the desorption process;
- means for generating a gaseous stream (34), crossing said cooling zone (24), whose flow-rate is independent from the flow-rate of the stream to be purified (31) and having a sufficient temperature to restore the conditions for the adsorbing material to adsorb;

17. Plant, according to claim 16, where said means for generating a desorption stream (22) include a closed loop (102), where pneumofore means (231) and heating means (232) are located, a feeding duct (114) of said closed loop (102) and a downflow duct (242) from said closed loop (102) for the desorption stream.

18. Plant, according to claim 17, further including:
- means (400) aimed to delimiting a washing zone (23), located between said desorption zone (22) and said cooling zone (24), foreseen to be crossed by a cleaning stream (33);
- means for generating a cleaning gaseous stream (33), aimed for crossing said cleaning zone (23), whose flow-rate is independent from the flow-rate of the stream (31) to be purified and having an sufficient temperature to activate a desorption process;
- an outlet duct for said cleaning stream (33), feeding said closed loop (102) where said desorption stream (32) is flowing.

19. Plant, according to claim 18, where said means for providing a washing stream (33) are suitable to generate a stream in counter current to the desorption stream (32), generated from said means to create a desorption stream (32).

20. Plant, according to claim 18 or 19, where said means for generating a cooling stream (34) include a closed loop ring (104), where pneumofore means (341) and cooling means (342) are located, said closed loop (104) being in communication with a feeding duct (114) of inert or low-oxygen content gas and with a downflow duct of cooling gas (330) feeding said means for generating a washing stream (33).

21. Plant, according to claim 20, where said washing circuit (103) do not request pneumofore means and where heating means (332) have been foreseen to warm up the gaseous stream coming from said cooling gas downflow duct (330).

22. Plant, according to claim 20 or 21, where said downflow duct (242) of the desorption stream feeds a combustion unit (40), and where said heating means (232, 332) of said desorption and washing streams (32, 33) are heat exchangers powered by the heat generated by said combustion unit (40).

23. Plant, according to one of the claims from 18 to 22, where said downflow duct (242) of the desorption stream is in communication with a cryogenic condenser (41) to separate the desorbed compounds and to obtain a clean stream (336) at the system outlet.

24. Plant, according to claim 23, where said cryogenic condenser (41) has an input to feed liquid nitrogen and an output to drain the gaseous nitrogen generated in said cryogenic condenser (41), said output for gaseous nitrogen being connected with said means aimed to generate a cleaning stream (33) or with said means to feed a cooling stream (34).

25. Plant, according to claim 23, where said cryogenic condenser (41) includes an output aimed to send said clean gaseous stream (336) to said means for generating a washing stream (33) or to said means for feeding a cooling stream (34).

26. Plant, according to one of the claims from 18 to 25, where means are provided to attain a second desorption zone (25), adjacent to said desorption zone (22), and means to generate a second desorption stream (35), that crosses said second desorption zone (25), having independent flow-rate from the flow-rate of the said stream to be purified (31), and having a sufficient temperature to activate a desorption process.

27. Plant, according to claim 26, where said means for generating a second desorption stream (35) include a closed loop (105), where pneumofore means (251) and heating means (252) are located, said closed loop (105) being in communication with said washing circuit and having a downflow duct of the second desorption stream (35) in connection with said downflow duct of the desorption stream (242).

28. Plant, according to one of the previous claims, where said adsorbent material in said rotor (1) has an incoherent form and is held inside a plurality of cavities (3) resulting parallel to said rotation axis (X).

29. Plant, according to claim 28, where the ends of said cavities (3) of said rotor (1) are closed with single or coupled nets.

30. Plant, according to claim 28 or 29, where said cavities (3) have metal walls lagged with thermal insulating material.

31. Plant, according to one of the previous claims from 27 to 29, where each of said cavities (3) of said rotor (1) has a section between 900 mm² and 2.500 mm².

32. Plant, according to one of the previous claims from 27 to 30. where said cavities (3) of said rotor (1) have a length between 30 mm and 120 mm.

33. Plant, according to one of the previous claims, where said adsorption zone (21) has a width ranging between 210° and 270°, where said desorption zone (22) and said desorption zones (22) and (25) have a width between 40° and 70°, where said washing zone (23) has a width between 5° and 10° and where said cooling zone (24) has a width between 40° and 70°.
